# FASCICULE DE BREVET EUROPEEN

(11) **EP 0 802 207 B1**
(45) Date de publication et mention de la délivrance du brevet: **24.10.2001**
(21) Numéro de dépôt: 97400814.6
(22) Date de dépôt: 09.04.1997
(51) Int. Cl.: C08F 255/00, C08F 255/02

(54) **Liant de coextrusion à base d'un mélange de polyoléfines cogreffées**
Koextrusionsbindemittel aus einer Mischung von gepfropften Polyolefinen
Coextrusion binder based on a mixture of cografted polyolefins

(30) Priorité: 19.04.1996 FR 9604938
(43) Date de publication de la demande: 22.10.1997
(73) Titulaire: Atofina, 92800 Puteaux (FR)
(72) Inventeur: Robert, Patrice M., 27170 Beaumont le Roger (FR); Breysse, Laurent M., 27300 Bernay (FR)
(74) Mandataire: Neel, Henry

(56) Documents cités:
- EP-A- 0 467 178
- EP-A- 0 501 762
- EP-A- 0 617 063
- US-A- 4 477 532

## Description

La présente invention concerne un liant de coextrusion à base d'un mélange de polyoléfines cogreffées.

Elle concerne plus précisément un mélange, utile comme liant de coextrusion, d'au moins (A) un polyéthylène ou un copolymère de l'éthylène et d'au moins (B) choisi parmi (B1) le propylène ou un copolymère du propylène, (B2) le poly (1-butène) homo ou copolymère et (B3) le polystyrène homo ou copolymère, le mélange de (A) et (B) étant greffé par un monomère fonctionnel, ce mélange greffé étant lui-même éventuellement dilué dans au moins une polyoléfine (C) ou dans au moins un polymère à caractère élastomérique (D) ou dans un mélange de (C) et (D).

Ces liants de coextrusion sont utiles par exemple pour fabriquer des matériaux multicouches pour l'emballage. On peut citer les matériaux comprenant un film de polyamide (PA) et un film de polyéthylène (PE), le film de polyéthylène pouvant être laminé sur le film de polyéthylène ou coextrudé avec le polyamide. Le liant de coextrusion est disposé entre le polyéthylène et le polyamide pour une bonne adhésion du PA et du PE. Ces matériaux multicouches peuvent être des structures à trois couches PE/liant/EVOH dans lesquelles EVOH désigne un copolymère de l'éthylène et de l'alcool vinylique ou un copolymère éthylène acétate de vinyle (EVA) saponifié en partie ou en totalité ou des structures à cinq couches PE/liant/EVOH/liant/PE.

L'art antérieur EP 35392 a décrit des polyéthylènes ou des copolymères de l'éthylène contenant au moins 85% en moles d'éthylène greffés par de l'anhydride maléique. Ces polyéthylènes greffés peuvent être ensuite dilués dans des polyéthylènes ou des copolymères de l'éthylène contenant au moins 50% en mole d'éthylène à condition que le mélange contienne au moins 80% en moles d'éthylène. Ces produits sont des liants de coextrusion. L'art antérieur EP 188 926 a décrit des polypropylènes greffés par de l'anhydride maléique, utiles comme liants de coextrusion.

Le greffage radicalaire de monomères fonctionnels sur les polyoléfines se fait soit à l'état fondu, soit en solution en utilisant des initiateurs de radicaux comme les peroxydes, soit à l'état solide par irradiation. Sous l'action des radicaux, des réactions secondaires se produisent en même temps que la réaction de greffage. Elles conduisent à une augmentation de la masse moléculaire dans le cas où le polymère à greffer est du polyéthylène, ou à sa diminution dans le cas où c'est du polypropylène. Si la quantité de radicaux nécessaire à la réaction de greffage est importante, l'évolution de la masse moléculaire de la polyoléfine conduit à une modification importante de sa viscosité à l'état fondu.

Ces greffages se font généralement en extrudeuse. La viscosité du polyéthylène greffé est si élevée qu'on ne peut plus l'extruder ; la viscosité du polypropylène greffé est si faible que lui aussi on ne peut plus l'extruder.

Ces phénomènes réduisent la quantité de fonctions réactives incorporables sur la polyoléfine par greffage radicalaire de monomères fonctionnels.

EP 617063 décrit le greffage de mélanges de (i) polypropylene homopolymeres ou de polypropylene contenant un peu d'éthylene et (ii) de copolymeres ethylene propylene pouvant être majoritaires en ethylene. La quantité de monomère à greffer qu'on ajoute au mélange de (i) et (ii) est au plus de 0,35 % en poids de (i) et (ii). Le produit greffé obtenu n'est pas un liant de coextrusion, mais il est ajouté à des polypropylenes chargés en fibres de verres.

Le but de l'invention est de produire des mélanges de (A) et (B) pouvant contenir par exemple 3 à 5 % en poids de greffons.

La demanderesse a découvert qu'il était possible de greffer des quantités élevées de monomère fonctionnel sur des mélanges de polyéthylène et de polypropylène. L'augmentation de la masse moléculaire du polyéthylène est compensée par la diminution de la masse moléculaire du polypropylène présent lors de la réaction de greffage radicalaire. La demanderesse a découvert qu'il est possible de les fabriquer à l'état fondu avec des outils conventionnels d'extrusion ou de mélangeage des matières plastiques. Les produits obtenus par cette méthode ont une fluidité telle qu'il est possible de les mettre en oeuvre facilement dans les procédés classiques de transformation des matières plastiques, de les mélanger de façon homogène avec d'autres polymères à l'état fondu, avec des techniques classiques dans des conditions habituelles de températures. Comparativement, des polyéthylènes greffés aux mêmes taux sont très visqueux et il n'est pas possible de les mettre en oeuvre dans des conditions normales de transformation. De plus, il n'est pas possible de les mélanger de façon homogène avec d'autres polymères à l'état fondu avec des techniques usuelles dans des conditions habituelles de température.

La présente invention concerne aussi une structure multicouche composée d'une couche comprenant le liant précédent, et directement attachée à celle-ci une couche de résine polaire azotée ou oxygénée telle qu'une couche (E) d'une résine polyamide, d'un copolymère saponifié d'éthylène et d'acétate de vinyle, d'une résine polyester, d'un oxyde minéral déposé sur un polymère tel que le PE, le polyéthylène téréphtalate ou l'EVOH, ou bien une couche métallique.

Selon cette forme, le liant peut être utilisé comme film de protection.

Selon une autre variante, l'invention concerne aussi la structure précédente et directement attachée à celle-ci, du côté du liant une couche (F) à base de polyoléfine.

S'agissant du liant de l'invention, (A) est choisi parmi les polyéthylènes homo- ou copolymères.

A titre de comonomères, on peut citer
- les alpha-oléfines, avantageusement celles ayant de 3 à 30 atomes de carbone.

Des exemples d'alpha-oléfines ayant 3 à 30 atomes de carbone comme comonomères éventuels comprennent le propylène, 1-butène, 1-pentène, 3-méthyl-1-butène, 1-hexène, 4-méthyl-1-pentène, 3-méthyl-1-pentène, 1-octène, 1-décène, 1-dodécène, 1-tétradécène, 1-hexadécène, 1-octadécène, 1―eicocène, 1-dococène, 1-tétracocène, 1-hexacocène, 1―octacocène, et 1-triacontène. Ces alpha-oléfines peuvent être utilisées seules ou en mélange de deux ou de plus de deux.
- les esters d'acides carboxyliques insaturés tels que par exemple les (méth)acrylates d'alkyle, les alkyles pouvant avoir jusqu'à 24 atomes de carbone.

Des exemples d'acrylate ou méthacrylate d'alkyle sont notamment le méthacrylate de méthyle, l'acrylate d'éthyle, l'acrylate de n-butyle, l'acrylate d'isobutyle, l'acrylate de 2-éthylhexyle.
- les esters vinyliques d'acides carboxyliques saturés tels que par exemple l'acétate ou le propionate de vinyle.
- les époxydes insaturés.

Des exemples d'époxydes insaturés sont notamment :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidylcarboxylate, le cyclohexène-4-glycidyl carboxylate, le 5-norbomène-2-méthyl-2-glycidyl carboxylate et l'endocis-bicyclo(2,2,1 )-5-heptène-2,3-diglycidyl dicarboxylate.
- les acides carboxyliques insaturés, leurs sels, leurs anhydrides.

Des exemples d'anhydrides d'acide dicarboxylique insaturé sont notamment l'anhydride maléique, l'anhydride itaconique, l'anhydride citraconique, l'anhydride tétrahydrophtalique.
- les diènes tels que par exemple le 1,4-hexadiène.
- (A) peut comprendre plusieurs comonomères.

Le polymère (A), qui peut être un mélange de plusieurs polymères, comprend au moins 50% et de préférence 75% (en moles) d'éthylène. La densité de (A) peut être comprise entre 0,86 et 0,98 g/cm³. Le MFI (indice de viscosité à 190°C, 2,16 kg) est compris avantageusement entre 1 et 1000 g/10 min.

A titre d'exemple de polymères (A) on peut citer
- le polyéthylène basse densité (LDPE)
- le polyéthylène haute densité (HDPE)
- le polyéthylène linéaire basse densité (LLDPE)
- le polyéthylène très basse densité (VLDPE)
- le polyéthylène obtenu par catalyse métallocène, c'est-à-dire les polymères obtenus par copolymérisation d'éthylène et d'alphaoléfine telle que propylène, butène, héxène ou octène en présence d'un catalyseur monosite constitué généralement d'un atome de zirconium ou de titane et de deux molécules cycliques alkyles liées au métal. Plus spécifiquement, les catalyseurs métallocènes sont habituellement composés de deux cycles cyclopentadiéniques liés au métal. Ces catalyseurs sont fréquemment utilisés avec des aluminoxanes comme cocatalyseurs ou activateurs, de préférence le méthylaluminoxane (MAO). Le hafnium peut aussi être utilisé comme métal auquel le cyclopentadiène est fixé. D'autres métallocènes peuvent inclure des métaux de transition des groupes IV A, V A, et VI A. Des métaux de la série des lanthamides peuvent aussi être utilisés.
- les élastomères EPR (éthylène - propylène - rubber)
- les élastomères EPDM (éthylène - propylène - diène)
- les mélanges de polyéthylène avec un EPR ou un EPDM
- les copolymères éthylène-(méth)acrylate d'alkyle pouvant contenir jusqu'à 60% en poids de (méth)acrylate et de préférence 2 à 40%
- les copolymères éthylène (méth)acrylate d'alkyle-anhydride maléique obtenus par copolymérisation des trois monomères, les proportions de (méth)acrylate étant comme les copolymères ci-dessus, la quantité d'anhydride maléique étant jusqu'à 10% et de préférence 0,2 à 6% en poids.
- les copolymères éthylène-acétate de vinyle-anhydride maléique obtenus par copolymérisation des trois monomères, les proportions étant les mêmes que dans le copolymère précédent.

S'agissant de (B1) c'est un polypropylène homo- ou copolymère. A titre de comonomères, on peut citer :
- les alpha oléfines, avantageusement celles ayant de 3 à 30 atomes de carbone. Des exemples de telles alphaoléfines sont les mêmes que pour (A) sauf à remplacer le propylène par l'éthylène dans la liste
- les diènes
(B1) peut être aussi un copolymère à blocs polypropylène.

A titre d'exemple de polymère (B1) on peut citer
- le polypropylène
- les mélanges de polypropylène et d'EPDM ou d'EPR.

Le polymère (B1), qui peut être un mélange de plusieurs polymères, comprend au moins 50% et de préférence 75% en moles de propylène.

(B2) est choisi parmi le poly (1-butène) ou les copolymères du 1-butène avec l'éthylène ou une autre alpha oléfine ayant de 3 à 10 carbones, sauf le propylène déjà cité en (B1).

(B3) est choisi parmi le polystyrène ou les copolymères du styrène. Parmi les copolymères, on peut citer à titre d'exemple les diènes ayant de 4 à 8 atomes de carbone.

La densité de (B) peut être comprise entre 0,86 et 0,98 g/cm³. Le MFI est compris avantageusement entre 1 et 30 g/10 min. Les proportions respectives de (A) et (B) peuvent être quelconques. Quand les liants de coextrusion de l'invention sont utilisés dans des structures comprenant une couche de polyoléfine (F), on préfère que (A) soit majoritaire dans le mélange de (A) et (B) si (F) est à base de polyéthylène ou est constitué essentiellement de polyéthylène. Par contre quand (F) est à base de polypropylène ou est constitué essentiellement de polypropylène alors on préfère que dans le mélange de (A) et (B) il y ait une majorité de (B).

Le mélange de (A) et (B) est greffé par un monomère fonctionnel. A titre d'exemples de fonctions greffées on peut citer les acides carboxyliques et leurs dérivés, les chlorures d'acides, les isocyanates, les oxazolines, les époxydes, les amines ou les hydroxydes.

Des exemples d'acides carboxyliques insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4―méthyl-cyclohex-4-ène-1,2-dicarboxylique, bicyclo(2,2,1 )hept-5-ène-2,3-dicarboxylique, x-méthylbicyclo(2,2,1-hept-5-ène-2,3-dicarboxylique, les anhydrides maléique, itaconique, citraconique, allylsuccinique, cyclohex-4-ène-1,2-dicarboxylique, 4―méthylénecyclohex-4-ène-1,2-dicarboxylique, bicyclo(2,2,1)hept-5-ène-2,3-dicarboxylique, et x―méthylbicyclo(2,2,1)hept-5-ène-2,2-dicarboxylique.

Des exemples d'autres monomères de greffage comprennent des esters alkyliques en C₁-C₈ ou des dérivés esters glycidyliques des acides carboxyliques insaturés tels que acrylate de méthyle, méthacrylate de méthyle, acrylate d'éthyle, méthacrylate d'éthyle, acrylate de butyle, méthacrylate de butyle, acrylate de glycidyle, méthacrylate de glycidyle, maléate de mono-éthyle, maléate de diéthyle, fumarate de monométhyle, fumarate de diméthyle, itaconate de monométhyle, et itaconate de diéthyle ; des dérivés amides des acides carboxyliques insaturés tels que acrylamide, méthacrylamide, monoamide maléique, diamide maléique, N―monoéthylamide maléique, N,N-diéthylamide maléique, N―monobutylamide maléique, N,N-dibutylamide maléique, monoamide furamique, diamide furamique, N-monoéthylamide fumarique, N,N-diéthylamide fumarique, N-monobutylamide fumarique et N,N-dibutylamide furamique ; des dérivés imides des acides carboxyliques insaturés tels que maléimide, N-butylmaléimide et N-phénylmaléimide ; et des sels métalliques d'acides carboxyliques insaturés tels que acrylate de sodium, méthacrylate de sodium, acrylate de potassium, et méthacrylate de potassium.

Divers procédés connus peuvent être utilisés pour greffer un monomère de greffage sur le mélange de (A) et (B).

Par exemple, ceci peut être réalisé en chauffant les polymères (A) et (B) à température élevée, environ 150° à environ 300°C, en présence ou en l'absence d'un solvant avec ou sans initiateur de radicaux. Des solvants appropriés qui peuvent être utilisés dans cette réaction sont le benzène, toluène, xylène, chlorobenzène, cumène, etc. Des initiateurs de radicaux appropriés qui peuvent être utilisés comprennent le t-butyl-hydroperoxyde, cumène―hydroperoxyde, di-iso-propyl-benzène-hydroperoxyde, di-t-butyl-peroxyde, t-butyl-cumyl-peroxyde, (dicumyl-peroxyde, 1,3-bis-(t-butylperoxy-isopropyl)benzène, acétyl-peroxyde, benzoyl-peroxyde, iso-butyryl-peroxyde, bis-3,5,5-triméthyl-hexanoyl-peroxyde, et méthyl-éthyl-cétone-peroxyde.

Dans le mélange de (A) et (B) modifié par greffage obtenu de la façon susmentionnée, la quantité du monomère de greffage peut être choisie d'une façon appropriée mais elle est de 1,2 à 10%, mieux de 1,2 à 5%, par rapport au poids de (A) et (B) greffés.

La quantité du monomère greffé est déterminée par dosage des fonctions succiniques par spectroscopie IRTF.

Le mélange cogreffé de (A) et (B) est avantageusement dilué dans une polyoléfine (C) ou dans un polymère à caractère élastomérique (D) ou dans un mélange de (C) et (D).

La polyoléfine (C) peut être choisie parmi les polymères (A) et (B). Si (A) est majoritaire dans le mélange de (A) et (B) avantageusement on choisit (C) parmi les polymères (A). Si (B) est majoritaire dans le mélange de (A) et (B) avantageusement on choisit (C) parmi les polymères (B).

(D) est un polymère à caractère élastomérique c'est-à-dire qu'il peut être un (i) élastomère au sens de ASTM D412 c'est-à-dire un matériau qui peut être étiré à température ambiante à deux fois sa largeur, maintenu ainsi 5 minutes puis quand il est relâché il revient à moins de 10% près à sa longueur initiale ou (ii) un polymère n'ayant pas exactement ces caractéristiques précédentes mais pouvant être étiré et revenir sensiblement à sa longueur initiale.

Avantageusement le MFI de (D) est compris entre 0,1 et 50.

A titre d'exemple de polymères (D) on peut citer :
- les EPR (éthylène propylène rubber) et les EPDM (éthylène propylène diène)
- les polyéthylènes obtenus par catalyse métallocène et de densité inférieure à 0,910 g/cm³.
- les polyéthylènes de type VLDPE (très basse densité) ;
- les élastomères styréniques tels que les SBR (styrène - butadiène-rubber), les copolymères blocs styrène-butadiène-styrène (SBS), les copolymères blocs styrène-éthylène/butène/styrène (SEBS) et les copolymères blocs styrène-isoprène-styrène (SIS).
- les copolymères de l'éthylène et d'au moins un ester d'acide carboxylique insaturé (déjà défini dans (A))
- les copolymères de l'éthylène et d'au moins un ester vinylique d'acide carboxylique saturé (déjà défini dans (A)).

La quantité de (C) ou (D) ou (C)+(D) est de 20 à 1 000 parties pour 10 parties de (A)+(B) greffés et de préférence 60 à 500.

Avantageusement on utilise (C) et (D). Les proportions préférées sont telles que (D)/(C) est compris entre 0 et 1 et plus particulièrement entre 0 et 0,5.

Le liant de l'invention peut être fabriqué par les moyens habituels des thermoplastiques par mélange à l'état fondu dans des extrudeuses, bivis, BUSS, des malaxeurs ou des mélangeurs à cylindre. (A) et(B) peuvent être prémélangés à sec ou à l'état fondu puis être greffés à l'état fondu ou en solution dans un solvant. Ils peuvent aussi être ajoutés séparément dans un dispositif de mise en contact et malaxage (par exemple une extrudeuse) ainsi que le monomère de greffage et l'initiateur de radicaux. Après greffage au mélange éventuellement avec (C) ou (D).

Le liant de l'invention peut comprendre encore divers additifs tels que des antioxydants, des absorbeurs d'ultra-violets, des agents antistatiques, des pigments, des colorants, des agents de nucléation, des charges, des agents de glissement, des lubrifiants, des produits ignifuges et des agents anti-blocage.

Les exemples d'anti-oxydants sont le 2,6-di-t-butyl-p-crésol, O-t-butyl-p-crésol, tétrakis-[mél.hylène-3-(3,5-di-t-butyl-4-hydroxyphenyl)propionate]méthane, la p―naphtylamine, et la para-phénylènediamine.

Les exemples d'absorbeurs d'ultra-violets sont la 2,4-dihydroxybenzophénone, le 2-(2'-hydroxy-3',5'-di-t-butylphényl)-5-chlorobenzotriazole, 2-(2-hydroxy-3-t-butyl-5-méthylphényl)-5-chlorobenzotriazole, et le bis(2,2',6,6')-tétraméthyl-4-pipéridine)sébacate.

Les exemples d'agents antistatiques sont la lauryldiéthanolamine, palmityl-diéthanolamine, stéaryl-di-éthanolamine, oléyl-diéthanolamine, béhényldiéthanolamine, polyoxyéthylène-alkylamines, le stéaryl-monoglycéride, et la 2-hydroxy-4-n-octoxybenzophénone.

Les exemples de colorants comprenant des pigments et des colorants sont le noir de carbone, blanc de titane, jaune de cadmium et bleu de phtalocyanine de cuivre.

Les exemples d'agents de nucléation sont le p―tert-butylbenzoate d'aluminium, dibenzylidène-sorbitol, et hydroxy-di-p-t-butylbenzoate d'aluminium.

Les exemples de charge sont les fibres de verres, fibres de carbone, talc, argile, silice, carbonate de calcium, sulfate de baryum, hydroxyde de magnésium, hydroxyde de calcium et oxyde de calcium.

Les exemples d'agents de glissement sont le stéaramide, oléamide et érucinamide.

Les exemples de lubrifiants sont le stéarate de calcium, stéarate de zinc, stéarate d'aluminium, stéarate de magnésium, et cire de polyéthylène.

Les exemples de produits ignifuges sont l'oxyde d'antimoine, le décabromobiphényl-éther, et la bis(3,5―dibromo-4-bromopropyloxyphényl)sulfone.

Les exemples d'agents anti-blocage sont le dioxyde de silicium et le polystyrène.

Les quantités de ces autres additifs peuvent être choisies parmi les quantités appropriées qui n'affectent pas d'une façon défavorable les liants de l'invention. Par exemple, rapportées au poids total de (A)+(B)+(C)+(D), les quantités appropriées sont d'environ 0,01 à environ 5% en poids pour les antioxydants ; environ 0,01 à environ 5% en poids pour les absorbeurs d'ultra-violets ; environ 0,01 à environ 1% en poids pour les agents antistatiques ; environ 0,01 à environ 5% en poids pour les agents colorants ; environ 0,01 à environ 5% en poids pour les agents de nucléation ; environ 0,1 à environ 60% en poids pour les charges ; environ 0,01 à environ 1% en poids pour les agents de glissement ; environ 0,01 à environ 1% en poids pour les lubrifiants ; environ 0,1 à environ 50% en poids pour les produits ignifuges ; et environ 0,01 à environ 30% en poids pour les agents anti-blocage.

La structure multicouche de la présente invention est constituée par la couche comprenant le liant précédent, et par une couche de résine polaire oxygénée ou azotée, ou d'un oxyde minéral déposé sur un polymère tel que le PE, le PET ou l'EVOH, ou une couche métallique.

Des exemples de résines polaires préférées dans la couche autre que le liant sont les résines de polyamide, un copolymère saponifié d'éthylène et d'acétate de vinyle, et les polyesters.

Plus spécifiquement, elles comprennent des polyamides synthétiques à longue chaîne ayant des motifs structurels du groupe amide dans la chaîne principale, tels que le PA-6, PA-6,6, PA-6,10, PA-11 et le PA-12 ; un copolymère saponifié d'éthylène et d'acétate de vinyle ayant un degré de saponification d'environ 90 à 100% en moles, obtenu en saponifiant un copolymère éthylène/acétate de vinyle ayant une teneur en éthylène d'environ 15 à environ 60% en moles ; des polyesters tels que le polyéthylène-téréphtalate, le polybutylène-téréphtalate, le polyéthylène naphténate et des mélanges de ces résines.

La couche d'oxyde minéral peut être par exemple de la silice, elle est déposée sur une couche de PE, PET ou EVOH. La structure de l'invention comprend donc respectivement : une couche de liant, une couche de SᵢO₂ (ou SᵢOₓ) et soit PE, soit PET soit EVOH.

La couche métallique peut être par exemple une feuille, une pellicule ou une feuille d'un métal tel que l'aluminium, le fer, le cuivre, l'étain et le nickel, ou un alliage contenant au moins un de ces métaux comme constituant principal. L'épaisseur de la pellicule ou de la feuille peut être convenablement choisie et elle est par exemple d'environ 0,01 à environ 0,2 mm. Il est de pratique courante de dégraisser la surface de la couche métallique avant de laminer sur elle le liant de l'invention.

On ne sortirait pas du cadre de l'invention si la structure précédente était associée à d'autres couches.

L'invention concerne aussi la précédente structure associée du côté du liant à une couche (F) à base de polyoléfine. La polyoléfine (F) peut être choisie parmi les polymères (A) et (B) précédents.

Ces structures sont utiles pour faire des emballages, par exemple des corps creux rigides tels que des flacons ou des bouteilles ou des poches souples, ou des films multicouches.

Les liants de l'invention sont utiles pour les structures suivantes.
PE/liant/EVOH/liant/PE (PE désigne le polyéthylène)
PE/liant/EVOH
PE/liant/PA
PP/liant/PA
PP/liant/EVOH/liant/PP (PP désigne le polypropylène).

Ces structures et ces emballages peuvent être fabriqués par coextrusion, lamination, extrusion-soufflage...

### Exemples

### NOMENCLATURE DES PRODUITS UTILISES :

On utilise les produits suivants :

| | | |
|---|---|---|
| **OREVAC 1** | | Mélange de polyoléfines à base de polyéthylène de densité = 0.909 g/cm3, de MFI = 0.8 et de point de fusion = 117°C greffé anhydride maléïque |
| **OREVAC 2** | | Polypropylène greffé anhydride maléïque de densité = 0,89 g/cm3, de MFI = 2 et de point de fusion = 151°C |
| **A1** | **CLEARFLEX MQ F0** | Polyéthylène très basse densité linéaire de MFI = 12 et de densité = 0.895 g/cm3 |
| **A2** | **CLEARFLEX MP D0** | Polyéthylène très basse densité linéaire de MFI = 7 et de densité = 0.900 g/cm3 |
| **A3** | **CLEARFLEX CL D0** | Polyéthylène très basse densité linéaire de MFI = 2.7 et de densité = 0.900 g/cm3 |
| **A4** | **TAFMER P048** | Polyéthylène très basse densité linéaire de MFI = 1 et de densité = 0.870 g/cm3 |
| **A5** | **EXACT 3027** | Polyéthylène très basse densité linéaire à catalyse métallocène de MFI =3.5 et de densité = 0.900 g/cm3 |
| **A6** | **ENGAGE 8200** | Polyéthylène très basse densité linéaire à catalyse métallocène de MFI = 5 et de densité = 0.870 g/cm3 |
| **A7** | **PEHD 2250 MN 53** | Polyéthylène haute densité de MFI = 25 et de densité = 0.953 g/cm3 |
| **A8** | **LOTADER 1** | Copolymère Ethylène/Acrylate d'éthyle/Anhydride maléïque (90.8/6/3.2) de MFI = 200 |
| **A9** | **ENGAGE 8100** | Polyéthylène très basse densité linéaire à catalyse métallocène de MFI = 1 et de densité = 0.870 g/cm3 |
| **B1** | **ADSYL 7130XCP** | Copolymère Propylène/Ethylène de densité = 0.89 g/cm3 et de MFI = 5.5 (230°C /2.16 kg) |
| **B2** | **PP 3010 GN 5** | Copolymère à blocs Propylène / Ethylène de densité = 0.902 g/cm3 et de MFI = 1 (230°C/2.16 kg) |
| **B3** | **VESTOLEN P5300** | Copolymère Propylène/Ethylène de densité = 0.904 g/cm3 et de MFI = 12 (230°C / 2.16 kg) |
| **B4** | **PP 3400 MN 1** | Polypropylène homopolymère de densité = 0.905 g/cm3 et de MFI = 40 (230°C /2.16 kg) |
| **B5** | **PP 3400 MR 5** | Copolymère à blocs Propylène / Ethylène de densité = 0.902 g/cm3 et de MFI = 40 (230°C/2.16 kg) |
| **B6** | **PP 3060 MN 5** | Copolymère à blocs Propylène / Ethylène de densité = 0.902 g/cm3 et de MFI = 6 (230°C / 2.16 kg) |
| **B7** | **PP 3010 GN 5** | Copolymère à blocs Propylène / Ethylène de densité = 0.902 g/cm3 et de MFI = 1 (230°C / 2.16 kg) |
| **C1** | **STAMYLEX 1026** | Polyéthylène basse densité linéaire de MFI = 2.2 et de densité = 0.919 g/cm3 |
| **C2** | **STAMYLEX 1046** | Polyéthylène basse densité linéaire de MFI = 4.4 et de densité = 0.919 g/cm3 |
| **C3** | **FLEXIRENE CL10** | Polyéthylène basse densité linéaire de MFI = 2.5 et de densité = 0.918 g/cm3 |
| **C4** | **LACQTENE LD 0304** | Polyéthylène basse densité radicalaire de MFI = 4 et de densité = 0.923 |
| **C5** | **PP 3021 GN3** | Polypropylène copolymère statistique de densité = 0.902 g/cm3 et de MFI = 2 (230°C /2.16 kg) |
| **D1** | **CLEARFLEX FF D0** | Polyéthylène très basse densité linéaire de MFI = 0.8 et de densité = 0900 g/cm3 |
| **D2** | **EXXELOR PE 808** | Copolymère Ethylène/Propylène à 23% de propylène et de MFI = 0.17 |
| **D3** | **LOTRYL 1** | Copolymère Ethylène/Acrylate de méthyl (71/29) de MFI = 3 |
| **D4** | **CLEARFLEX CL D0** | Polyéthylène très basse densité linéaire de MFI = 2.7 et de densité = 0.900 g/cm3. |

### PROCEDE DE FABRICATION DES MELANGES M i GREFFES :

Les produits sont greffés par de l'anhydride maléïque. Ils sont fabriqués en extrudeuse bi-vis corotative de type WERNER ou LEISTRITZ.

Les extrudeuses comprennent 8 zones numérotées Z1 à Z8, Z8 est située en fin d'extrudeuse du côté de la sortie des produits greffés. On opère aux températures habituelles.

L'anhydride maléïque, sur poudre de polymère, et les polymères **A** et **B** à greffer sont introduits en zone Z1 par l'intermédiaire de deux doseurs pondéraux séparés.

L'initiateur radicalaire, pur ou en dilution dans un solvant approprié, est introduit par une pompe doseuse en zone Z2. Les températures dans les zones Z3, Z4 et Z5 sont au moins suffisantes pour que 99.9% de l'initiateur radicalaire réagisse avant la zone Z6. L'initiateur utilisé est le peroxyde de 2,5 diméthyl-2,5 (ditertiobutyl) hexane (LUPEROX 10) (DHBP).

Les résidus de l'initiateur radicalaire, le solvant et l'anhydride maléïque non réagi sont dégazés sous vide en zone Z6.

Le débit d'extrusion en sortie de la zone Z8 varie suivant la vitesse de vis imposée entre 12 et 15 kg/h.

Le jonc est granulé après refroidissement.

Dans les exemples **1** à **27** les mélanges **M i** ont été greffés selon le procédé décrit précédemment. Les produits ont été caractérisés par leur indice de fluidité (MFI sous 2.16 kg à 190°C exprimé en dg/mn) et la teneur en anhydride maléïque (AM) greffée (exprimée en pourcents massiques).

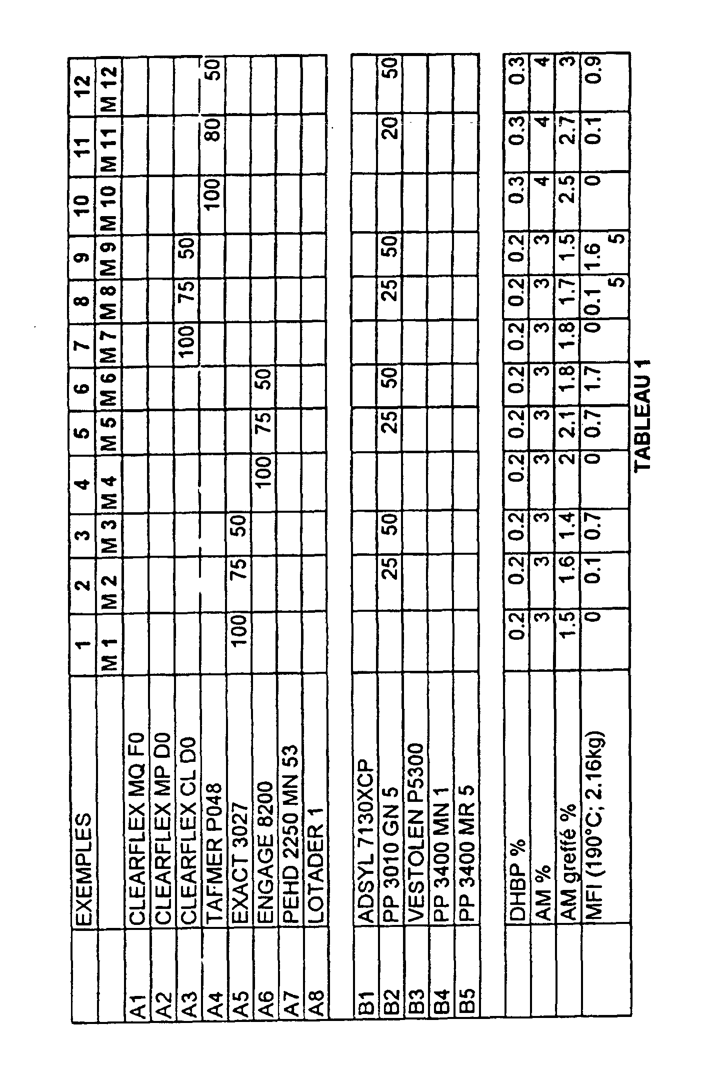

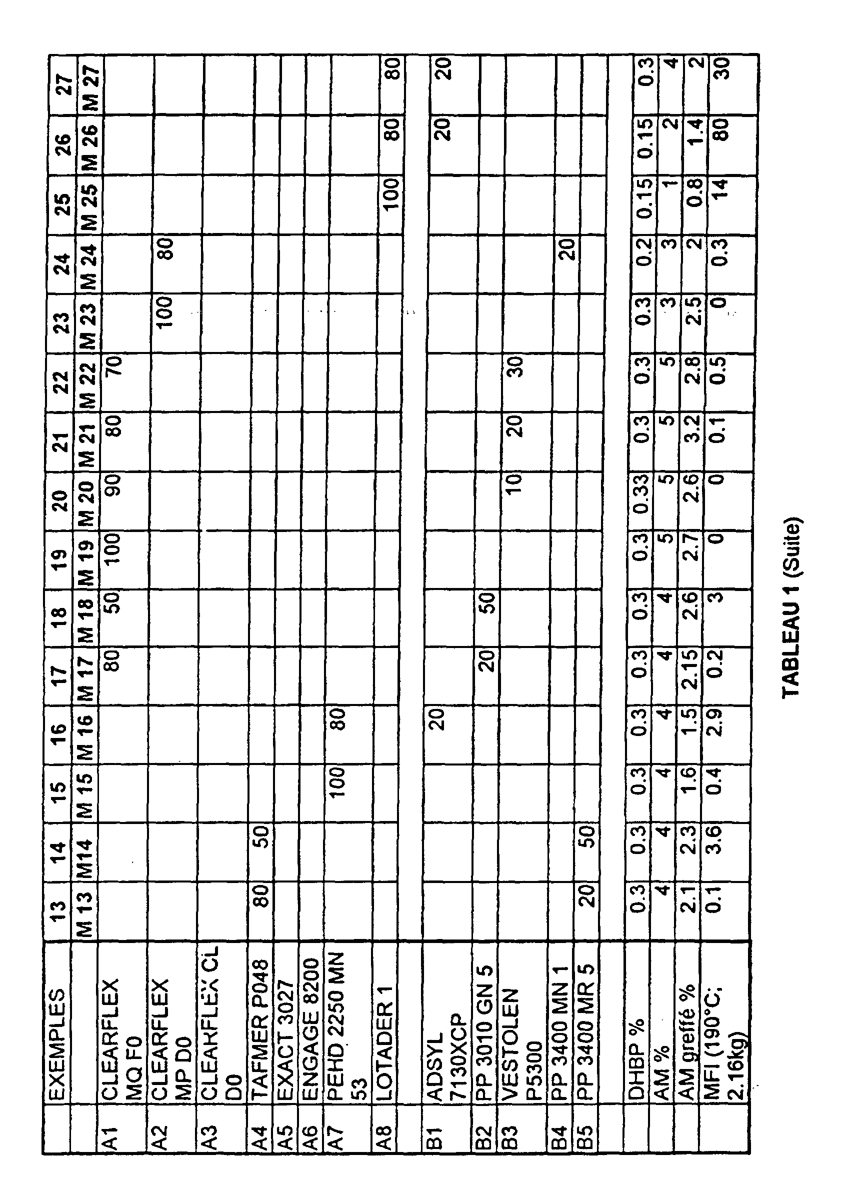

### PROCEDE DE FABRICATION DES LIANTS L i,j : (Li, j est fabriqué à partir de Mi)

Les liants **L i,j** sont fabriqués en extrudeuse bi-vis corotative de type WERNER ou LEISTRITZ, ayant 8 zones (Z1 à Z8) comme précédemment et dans les conditions habituelles de température.

Le mélange greffé **M i** et les polymères **C** et **D** à mélanger sont introduits en zone Z1 par l'intermédiaire de deux doseurs pondéraux séparés. Les granulés des polymères C et D ont préalablement été mélangés à sec dans un mélangeur lent à tonneau dans les proportions souhaitées. Les températures dans les zones sont au moins suffisantes pour assurer la fusion des différent produits et permettre un bon mélangeage de la masse fondue.

Le débit d'extrusion en sortie de la zone Z8 varie suivant la vitesse de vis imposée entre 12 et 15 kg/h.

Le jonc est granulé après refroidissement. Les produits sont caractérisés par leur indice de fluidité (MFI sous 2.16 kg à 190°C exprimé en dg/mn).

Les liants **L i, j** utilisés dans les exemples **28** à **47** ont été fabriqués selon le procédé décrit précédemment. Leurs caractéristiques sont reportés dans le **tableau 2.**

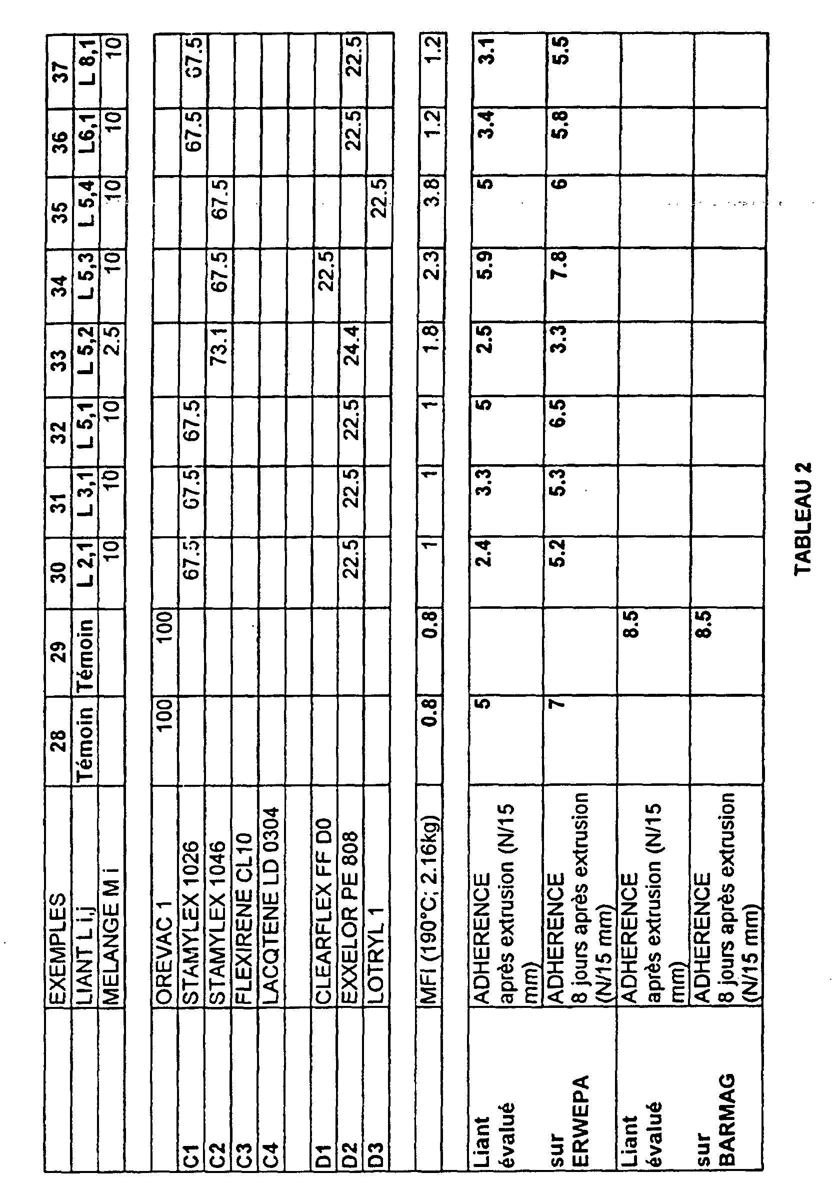

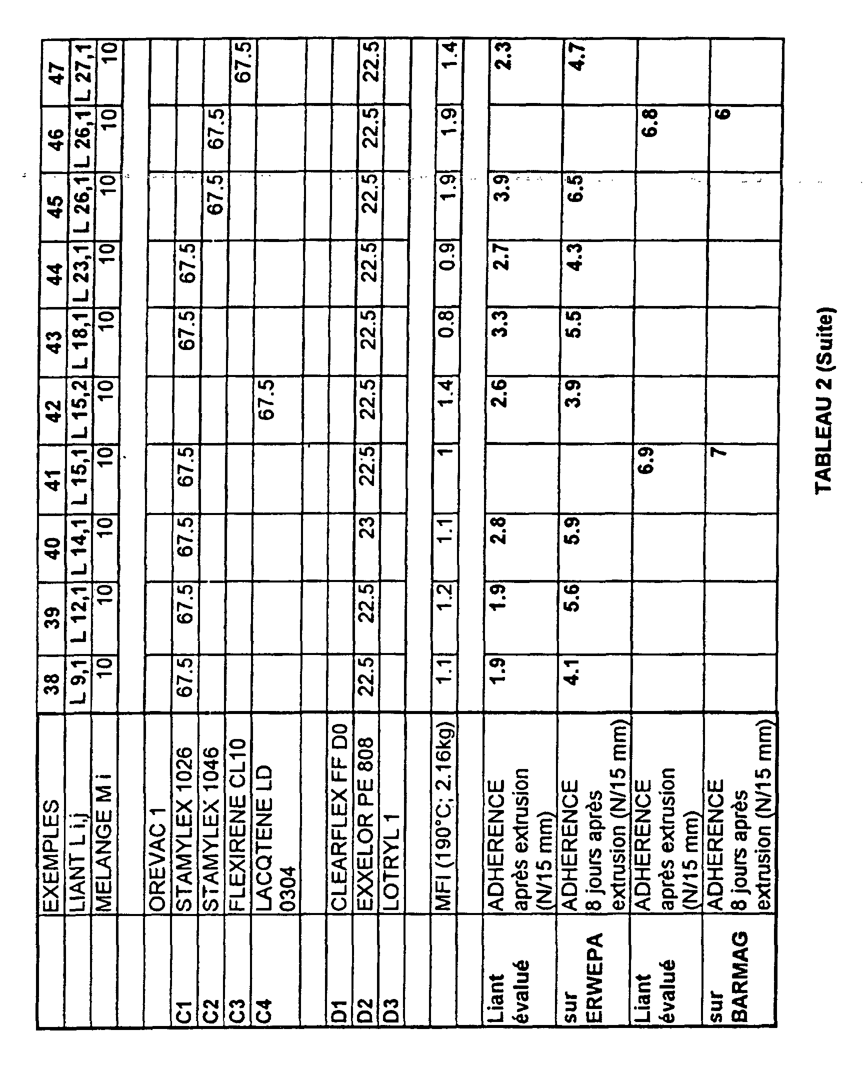

### Mise en oeuvre et évaluation des liants :

Dans les exemples **28, 30 à 40, 42 à 45 et 47,** les liants L 2,1, L 3,1, L 5,1, L 5,2, L 5,3, L 5,4, L 6,1, L 8,1, L 9,1, L 12,1, L 14,1, L 15,1, L 15,2, L 18,1, L 23,1, L 26,1 et L 27,1 ont été évalués comme liants du système 5 couches PE/Liant/EVOH/Liant/PE comparativement à un liant classique de ce type d'application (OREVAC 1). Le PE est le PEBD 1020 FN 24 et l'EVOH, le SOARNOL ET. La structure cinq couches a été réalisée sur un ensemble d'extrudeuses ERWEPA en film cast dans les conditions habituelles d'extrusion de ce genre de structure avec les épaisseurs suivantes 20/10/10/10/20 exprimées en µm.

L'adhésion a été évaluée par pelage avec un angle de pelage libre à une vitesse de traverse de 200 mm/mn sur des éprouvettes prédécoupées de 15 mm de large et 20 mm de long. L'adhérence est mesurée juste après l'extrusion et 8 jours plus tard (TABLEAU 2).

Dans les exemples **29, 41** et **46,** les liants L 15,1 et L 26,1 ont été évalués comme liants du système 3 couches PE/Liant/EVOH comparativement à un liant classique de ce type d'application (OREVAC 1).Le PE est le PEBD 1020 FN 24 et l'EVOH, le SOARNOL DT. La structure trois couches a été réalisée sur un ensemble d'extrudeuses BARMAG en film soufflé dans les conditions habituelles d'extrusion de ce genre de structure avec les épaisseurs suivantes 40/10/20 exprimées en µm.

L'adhésion a été évaluée par pelage avec un angle de pelage libre à une vitesse de traverse de 200 mm/mn sur des éprouvettes prédécoupées de 15 mm de large et 20 mm de long. L'adhérence est mesurée juste après l'extrusion et 8 jours plus tard (TABLEAU 2).

### PROCEDE DE FABRICATION DES MELANGES Mi GREFFES :

Dans les exemples **48** et **49** les mélanges **Mi** ont été greffés selon le même procédé que pour les exemples **1 à 27.**

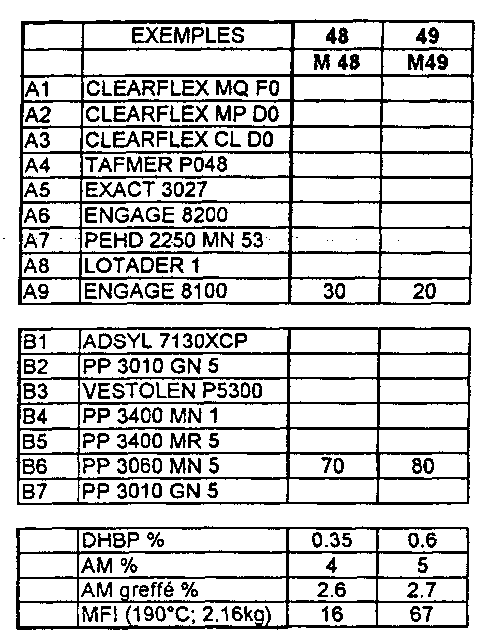

Dans les exemples **53, 54 et 55,** les mélanges **Mi** ont été greffés selon le même procédé que pour les exemples **1 à 27** mais en utilisant le méthacrylate de glycidyle à la place de l'anhydride maléïque. Le monomère à greffer, pur ou en solution dans un solvant approprié, est dans ce cas introduit à l'aide d'une pompe doseuse en zone Z2.

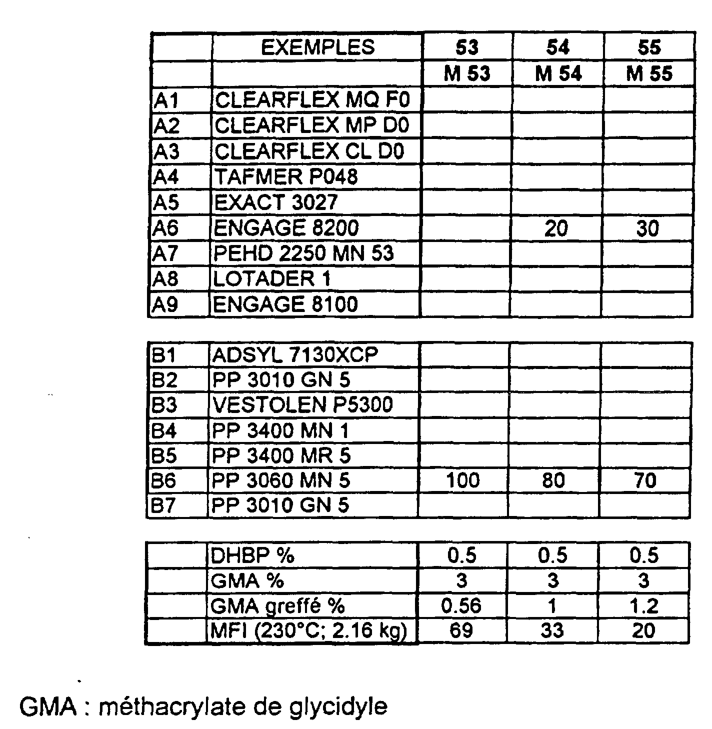

### PROCEDE DE FABRICATION DES LIANTS Li,j : (Li,j est fabriqué à partir de Mi)

Les liants Li,j utilisés dans les exemples **50 à 52** ont été fabriqués selon le même procédé que pour les exemples **28 à 47.** Leurs caractéristiques sont reportés dans le **tableau 3**

**Tableau 3**

| | EXEMPLES | **50** | **51** | **52** |
|---|---|---|---|---|
| | LIANT Li,j | Témoin | L 48.1 | L 49.1 |
| | MELANGE M i | | 16 | 15 |
| | OREVAC 1 | | | |
| | OREVAC 2 | 100 | | |
| **C1** | STAMYLEX 1026 | | | |
| **C2** | STAMYLEX 1046 | | | |
| **C3** | FLEXIRENE CL10 | | | |
| **C4** | LACQTENE LD 0304 | | | |
| **C5** | PP 3021 GN 5 | | 65 | 65 |
| **D1** | CLEARFLEX FF D0 | | | |
| **D2** | EXXELOR PE 808 | | | |
| **D3** | LOTRYL 1 | | | |
| **D4** | CLEARFLEX CL D0 | | 20 | 20 |
| | MFI (230°C ; 2.16 kg) | 2 | 2.3 | 2.5 |
| **Liant évalué sur ERWEPA** | ADHERENCE après extrusion (N/15 mm) | | | |
| | ADHERENCE 8 jours après extrusion (N/15 mm) | | | |
| **Liant évalué sur BARMAG** | ADHERENCE après extrusion (N/15 mm) | 2.9 | 2.3 | 4 |
| | ADHERENCE 8 jours après extrusion (N/15 mm) | 3.8 | 5.3 | 5.3 |

### Mise en oeuvre et évaluation des liants :

Dans les exemples **50, 51 et 52,** les liants L 48,1 et L 49,1 ont été évalués comme liants du système 3 couches PP/Liant/EVOH comparativement à un liant classique de ce type d'application (OREVAC 2). Le PP est le PP 3021 GN 3 et l'EVOH, le SOARNOL ET. La structure trois couches a été réalisée sur un ensemble d'extrudeuses BARMAG en film soufflé dans les conditions habituelles d'extrusion de ce genre de structure avec les épaisseurss suivantes 40/10/20 exprimées en µm.

L'adhésion a été évaluée par pelage avec un angle de pelage libre à une vitesse de traverse de 200 mm/mn sur des éprouvettes prédécoupées de 15 mm de large et 20 mm de long.

L'adhérence est mesurée juste après l'extrusion et 8 jours plus tard.

## Revendications

1. Mélange utile comme liant de coextrusion, comprenant :
- au moins (A) un polyéthylène ou un copolymère de l'éthylène, comprenant au moins 50 % en mole d'éthylène,
- au moins (B) choisi parmi (B1) le polypropylène ou un copolymère du propylène comprenant au moins 50 % en mole de propylène, (B2) le poly (1-butène) homo ou copolymère, et (B3) le polystyrène homo ou copolymère,
- le mélange de (A) et (B) étant greffé par un monomère fonctionnel, en quantite de 1,2 à 10 % en poids du mélange de (A) et (B) greffés,
- ce mélange greffé étant lui-même éventuellement dilué dans au moins une polyoléfine (C) ou dans au moins un polymère (D) à caractère élastomérique ou dans un mélange de (C) et (D).

2. Mélange selon la revendication 1 dans lequel (A) comprend de préférence 75% en mole d'éthylène.

3. Mélange selon la revendication 1 ou 2 dans lequel (B1) comprend de préférence 75% en mole de propylène.

4. Mélange selon l'une quelconque des revendications précédentes dans lequel le monomère fonctionnel est choisi parmi les acides carboxyliques et leurs dérivés, les chlorures d'acides, les isocyanates, les oxazolines, les époxydes, les amines ou les hydroxydes et de préférence les anhydrides d'acides dicarboxyliques insaturés.

5. Mélange selon l'une quelconque des revendications précédentes dans lequel (C) est choisi parmi les polymères (A) et (B).

6. Mélange selon l'une quelconque des revendications précédentes dans lequel la quantité de (C) ou (D) ou de (C) et (D) est de 20 à 1 000 parties pour 10 parties du mélange de (A) et (B) greffé et de préférence 60 à 500 parties.

7. Mélange selon l'une quelconque des revendications précédentes dans lequel les proportions de (C) et (D) sont telles que (D)/(C) en poids est compris entre 0 et 1 et de préférence entre 0 et 0,5.

8. Structure multicouche comprenant
- une couche comprenant un liant constitué du mélange des revendications précédentes ;
- et directement attachée à celle-ci une couche de résine polaire azotée ou oxygénée telle qu'une couche (E) d'une résine polyamide, d'un copolymère saponifié d'éthylène et d'acétate de vinyle, d'une résine polyester, ou d'un oxyde minéral déposé sur un polymère tel que le polyéthylène, le polyéthylène téréphtalate ou l'EVOH, ou bien une couche métallique.

9. Structure selon la revendication 8 comprenant une couche (F) à base de polyoléfine directement attachée à la couche de liant.

10. Structure selon la revendication 9 dans laquelle (F) est constitué essentiellement de polyéthylène et (A) est majoritaire dans le mélange (A)+(B).

11. Structure selon la revendication 9 dans laquelle (F) est constitué essentiellement de polypropylène et (B) est majoritaire dans le mélange (A)+(B).

## Patentansprüche

1. Gemisch, das als Coextrusionsbindemittel verwendbar ist, enthaltend:
- mindestens (A) ein Polyethylen oder ein Copolymeres von Ethylen mit mindestens 50 Mol-% Ethylen,
- mindestens (B), das aus (B1) dem Polypropylen oder einem Copolymeren von Propylen mit mindestens 50 Mol-% Propylen, (B2) dem Poly(1-buten)homo- oder -copolymeren und (B3) einem Polystyrolhomo- oder -copolymeren gewählt ist,
- wobei dem Gemisch aus (A) und (B) ein funktionelles Monomeres in einer Menge von 1,2 bis 10 Gew.-% des aufgepfropften Gemisches (A) und (B) aufgepfropft ist,
- wobei dieses Pfropfgemisch selbst gegebenenfalls in mindestens einem Polyolefin (C) oder in mindestens einem Polymeren (D) mit Elastomereigenschaften oder in einem Gemisch aus (C) und (D) verdünnt ist.

2. Gemisch nach Anspruch 1, in dem (A) vorzugsweise 75 Mol-% Ethylen enthält.

3. Gemisch nach Anspruch 1 oder 2, in dem (B1) vorzugsweise 75 Mol-% Propylen enthält.

4. Gemisch nach irgendeinem der vorangehenden Ansprüche, in dem das funktionelle Monomere aus den Carbonsäuren und ihren Derivaten, den Säurechloriden, den Isocyanaten, den Oxazolinen, den Epoxiden, den Aminen oder den Hydroxyden und vorzugsweise den Anhydriden ungesättigter Dicarbonsäsuren gewählt ist.

5. Gemisch nach irgendeinem der vorangehenden Ansprüche, in dem (C) aus den Polymeren (A) und (B) gewählt ist.

6. Gemisch nach irgendeinem der vorangehenden Ansprüche, in dem die Menge von (C) oder (D) oder von (C) und (D) von 20 bis 1.000 Teilen pro 10 Teile des Pfropfgemisches aus (A) und (B) und vorzugsweise von 60 bis 500 Teilen reicht.

7. Gemisch nach einem der vorangehenden Ansprüche, in dem die Anteile von (C) und (D) so sind, daß (D)/(C) gewichtsbezogen zwischen 0 und 1 und vorzugsweise zwischen 0 und 0,5 liegt.

8. Mehrlagige Struktur, enthaltend:
- eine Schicht mit einem Bindemittel, das aus dem Gemisch der vorangehenden Ansprüche besteht;
- und unmittelbar an dieser anhaftend eine Schicht aus einem polaren stickstoffhaltigen oder sauerstoffhaltigen Harz, wie z.B. eine Schicht (E) aus einem Polyamidharz, einem verseiften Copolymeren von Ethylen und Vinylacetat, einem Polyesterharz, oder einem auf einen Polymeren wie Polyethylen, Polyethylenterephthalat oder EVOH aufgebrachten anorganischen Oxid oder auch eine Metallschicht.

9. Struktur nach Anspruch 8 mit einer Schicht (F) auf Polyolefinbasis, die unmittelbar an der Bindemittelschicht haftet.

10. Struktur nach Anspruch 9, in der (F) im wesentlichen aus Polyethylen besteht und (A) der größte Teil im Gemisch (A)+(B) ist.

11. Struktur nach Anspruch 9, in der (F) im wesentlichen aus Polypropylen besteht und (B) der größte Teil im Gemisch (A)+(B) ist.

## Claims

1. Blend useful as a coextrusion binder, comprising:
- at least (A) a polyethylene or an ethylene copolymer comprising at least 50 mol% ethylene,
- at least (B) chosen from (B1), polypropylene or a propylene copolymer comprising at least 50 mol% propylene, (B2), poly(1-butene) homopolymer or copolymer, and (B3), polystyrene homopolymer or copolymer,
- the blend of (A) and (B) being grafted by a functional monomer in an amount from 1.2 to 10% by weight of the blend of grafted (A) and grafted (B),
- this grafted blend itself possibly being diluted in at least one polyolefin (C) or in at least one polymer (D) having an elastomeric character or in a blend of (C) and (D).

2. Blend according to Claim 1, in which (A) preferably comprises 75 mol% ethylene.

3. Blend according to Claim 1 or 2, in which (B1) preferably comprises 75 mol% propylene.

4. Blend according to any one of the preceding claims, in which the functional monomer is chosen from carboxylic acids and their derivatives, acid chlorides, isocyanates, oxazolines, epoxides, amines or hydroxides and preferably anhydrides of unsaturated dicarboxylic acids.

5. Blend according to any one of the preceding claims, in which (C) is chosen from the polymers (A) and (B).

6. Blend according to any one of the preceding claims, in which the amount of (C) or (D) or of (C) and (D) is from 20 to 1 000 parts, and preferably 60 to 500 parts, per 10 parts of the grafted blend of (A) and (B).

7. Blend according to any one of the preceding claims, in which the proportions of (C) and (D) are such that (D)/(C) by weight is between 0 and 1 and preferably between 0 and 0.5.

8. Multilayer structure comprising:
- a layer comprising a binder consisting of the blend of the preceding claims;
- and, directly attached to the above layer, a layer of nitrogen-containing or oxygen-containing polar resin, such as a layer (E) of a polyamide resin, a saponified ethylene/vinyl acetate copolymer, a polyester resin or a mineral oxide deposited on a polymer such as polyethylene, polyethylene terephthalate or EVOH, or else a metal layer.

9. Structure according to Claim 8, comprising a polyolefin-based layer (F) directly attached to the binder layer.

10. Structure according to Claim 9, in which (F) consists essentially of polyethylene and (A) is predominant in the (A) + (B) blend.

11. Structure according to Claim 9, in which (F) essentially consists of polypropylene and (B) is predominant in the (A) + (B) blend.
